# EUROPÄISCHE PATENTSCHRIFT

(11) **EP 0 342 401 B1**
(45) Veröffentlichungstag und Bekanntmachung des Hinweises auf die Patenterteilung: **30.03.1994**
(21) Anmeldenummer: 89107534.3
(22) Anmeldetag: 26.04.1989
(51) Int. Cl.: B60R 21/32

(54) **Einrichtung zur Auslösung einer passiven Sicherheitseinrichtung**
Device for triggering a passive safety system
Dispositif pour déclencher un système de sécurité passif

(30) Priorität: 16.05.1988 DE 3816587
(43) Veröffentlichungstag der Anmeldung: 23.11.1989
(73) Patentinhaber: TEMIC TELEFUNKEN microelectronic GmbH, 74072 Heilbronn (DE)
(72) Erfinder: Wöhrl, Alfons, D-8898 Schrobenhausen (DE); Hora, Peter, D-8898 Schrobenhausen (DE); Fendt, Günter, D-8898 Schrobenhausen (DE)
(74) Vertreter: Maute, Hans-Jürgen, Dipl.-Ing.

(56) Entgegenhaltungen:
- EP-A- 0 292 669
- DE-A- 2 123 359
- DE-A- 2 920 147
- DE-A- 3 717 427
- FR-A- 2 094 980

## Beschreibung

Die Erfindung bezieht sich auf eine Einrichtung zur Auslösung einer passiven Sicherheitseinrichtung in Fahrzeugen gemäß dem Oberbegriff des ersten Patentanspruches.

In der älteren, jedoch nicht druckschriftlich vor veröffentlichten EP-A-0 292 669 (Stand der Technik gemäß Artikel 54 (3) und (4) EPÜ) der Anmelderin sind zwei Beschleunigungsaufnehmer (1 und 2) zusätzlich mit je einer Beschleunigungsbewertungsschaltung (13, 14 bzw. 16, 15) verbunden. Dabei weisen die Beschleunigungsbewertungsschaltungen jeweils zwei verschiedene Schwellwerte (Ref. 1 und Ref. 2) auf und beide Schwellwerte müssen bei einem kritischen Aufprall des Fahrzeuges erreicht werden. Außerdem werden die Ausgänge dieser Bewertungsschaltungen (13, 14) über ein ODER-Gatter (19) mit einer Steuerschaltung (Auslöseschaltung für die Sicherheitsvorrichtung) verbunden.

Es ist wichtig, daß bei für die Auslösung ausreichenden ersten und zweiten Schwellwerten ein Heck- bzw. Seitenaufprall von einem Frontal- oder Schrägaufprall eindeutig unterschieden werden kann.

Aus der vorveröffentlichten DE-A-29 20 147 ist eine Anordnung mit einem einzelnen Beschleunigungssensor bekannt, dessen zwei Sensorspulen verschiedene Winkel bildende Magnetkreise aufweisen. Ein derartiger Sensor benötigt besondere Abschirmungen gegen Einflüsse von außen, insbesondere elektromagnetischer Wellen.

Der Erfindung liegt die Aufgabe zugrunde, eine Einrichtung der in Rede stehenden Art zu verbessern, um einerseits zuverlässig unterschiedliche Aufprallarten unterscheiden und andererseits die Einrichtung auch an unterschiedliche Fahrzustände des Fahrzeuges anpassen zu können.

Diese Aufgabe ist gemäß der Erfindung durch die Merkmale des Patentanspruchs 1 gelöst.

Demgemäß wird eine verfeinerte Logik vorgeschlagen, mit der die Ausgangssignale der einzelnen Signalkanäle in vielfältiger Hinsicht bewertet werden können. In jedem Signalkanal sind in jeder Schwellwertschaltung mehrere Schwellwertschalter mit unterschiedlichen Schwellwerten vorgesehen, wobei diese Schwellwerte so gewählt sind, daß eine Auslösung der Sicherheitseinrichtung bei unterschiedlichen Fahrsituationen möglich ist. Welcher der Schwellwertschalter tatsächlich die Auslösung bewirkt, wird in einer Bewertungsschaltung und einer Logik ermittelt, mit deren Hilfe Signale aller Kanäle bewertet und aufgrund dieser Bewertung Sperr- und Freigabesignale abgegeben werden, die dann einen bestimmten Signalweg innerhalb der Einrichtung bis zum Leistungsschalter der Sicherheitseinrichtung freigeben bzw. sperren.

Eine praxisgerechte Lösung erzielt man mit zwei Signalkanälen mit jeweils einem Beschleunigungsaufnehmer, wobei die Empfindlichkeitsachsen der Beschleunigungsaufnehmer in einer horizontalen Ebene in Bezug zu der Kraftfahrzeuglängsachse unter entgegengesetzt gleichen Winkeln (φ) ausgerichtet sind, positiv oder negativ geneigt gegen die Kraftfahrzeuglängsachse.

Die einzelnen Signalkanäle weisen für die Bewertung vorzugsweise eine einfache oder doppelte Integratorschaltung auf und sind mit zwei Schwellwertschaltern ausgerüstet, wobei der eine Schwellwert relativ niedrig und der andere Schwellwert relativ hoch angesetzt ist. Bei der Bewertung wird dann festgelegt, welcher dieser beiden Schwellwerte für eine etwaige Auslösung der Sicherheitseinrichtung herangezogen werden soll. In der Bewertungsschaltung werden hierfür die aufintegrierten Signale in den einzelnen Kanälen und/oder die Ausgangssignale der Beschleunigungsaufnehmer direkt, gegebenenfalls nach einer Glättung und Signalformung verwendet. Diese Bewertung ermöglicht eine eindeutige Erkennung, ob die Ausgangssignale der Beschleunigungsaufnehmer einem Aufprall zuzuordnen sind oder durch andere Umstände bedingt sind. Letzteres kann z.B. der Fall sein, wenn das Fahrzeug über eine ausgesprochen schlechte Wegstrecke, durch Schlaglöcher, über eine Bordsteinkante oder dergleichen fährt. Ebenfalls können Situationen erkannt werden, in denen der Beschleunigungsaufnehmer kurzfristig so hoch mechanisch belastet wird, z.B. bei einem Hammerschlag, daß ohne eine Bewertung die Sicherheitseinrichtung ausgelöst würde. Dieses muß jedoch in jedem Falle verhindert werden.

Die Bewertungsschaltung soll z.B. eine UND-Verknüpfung enthalten, in der die Ausgangssignale der Beschleunigungsaufnehmer unabhängig voneinander mit einem relativ niedrigen Schwellwert verglichen werden und/oder eine ODER-Verknüpfung, in der die Ausgangssignale der Beschleunigungsaufnehmer unabhängig voneinander mit einem relativ hohen Schwellwert verglichen werden. Wird bei der Bewertung in einem der Vergleiche ein Ausgangssignal erzeugt, so werden z.B. in der Logik der Auslöseschaltung diejenigen Gatter-Eingänge freigegeben, die den Schwellwertschaltern mit einem relativ niedrigen Schwellwert in den einzelnen Signalkanälen zugeordnet sind.

Zur eindeutigen Definition des zeitlichen Beginns eines Aufpralls werden die bereits aufintegrierten Signale der einzelnen Signalkanäle unabhängig voneinander einem Schwellwertschalter mit jeweils nachgeschaltetem Impulsverlängerungsglied zugeführt. Die Ausgänge der Impulsverlängerungsglieder werden mit einer Vergleichs- und Zeitschaltung verbunden, die für eine bestimmte Zeit nach Beginn des Aufpralls die Eingänge der Logik der Auslöseschaltung, die den Schwellwertschaltern mit niedrigen Schwellwerten zugeordnet sind, freigeben und anschließend sperren, so daß dann nur noch die Ausgangssignale der Schwellwertschalter mit höheren Schwellwerten berücksichtigt werden.

Die Ausgangssignale der Beschleunigungsaufnehmer können auch dazu herangezogen werden, eindeutig einen Heckaufprall oder etwa einen Hammerschlag zu erkennen. Im ersten Fall werden die Signale der Beschleunigungsaufnehmer nach Invertierung jeweils über eine Integratorschaltung geführt. Die Ausgangssignale dieser Integratorschaltungen werden in einem gemeinsamen ODER-Glied zusammengefaßt, dessen Ausgangssignal den Leistungsschalter für die Auslösung der Sicherheitseinrichtung bei einem Heckaufprall sperrt.
Im zweiten Fall (Hammerschlag) werden die Ausgangssignale eines jeden Beschleunigungsaufnehmers in kurzen Zeitabständen abgetastet, wobei jeweils der momentane Wert am Ende eines solchen Zeitintervalles mit dem innerhalb dieses Zeitintervalles aufgetretenen Minimal wert verglichen wird. Werden bei diesem Vergleich hohe Differenzen festgestellt, so wird in der Hammerschlag-Bewertungsschaltung (die mit der Start- und Auswahlschaltung verbunden ist) überprüft, ob diese hohen Differenzen innerhalb eines bestimmten Zeitintervalls auftreten, was auf eine mechanische, nicht durch einen Aufprall verursachte Belastung des Beschleunigungsaufnehmers schließen läßt. In diesem Falle wird ebenfalls der Leistungsschalter für die Sicherheitseinrichtung gesperrt.

Mit einer Einrichtung gemäß der Erfindung kann der momentane Schwellwert immer so ausgewählt werden, daß bei einem Aufprall des Fahrzeuges, bei dem die Sicherheitseinrichtung zum Schutz der Fahrzeuginsassen ausgelöst werden muß, dieses zum frühest möglichen Zeitpunkt geschieht, in anderen Situationen jedoch gesperrt wird. Die Anpassungsfähigkeit der Einrichtung an unterschiedliche Fahrzeugtypen, unterschiedliche Fahrsituationen und unterschiedliche Aufprallarten kann auf diese Weise optimiert werden.

Weitere Ausgestaltungen der Erfindung gehen aus den Unteransprüchen hervor. Die Erfindung ist in einem Ausführungsbeispiel anhand der Zeichnung näher erläutert. In dieser stellen dar:
- Fig. 1: schematisch den Einbau zweier Beschleunigungsaufnehmer mit ihren unterschiedlich zur Fahrzeuglängsachse ausgerichteten Empfindlichkeitsachsen;
- Fig. 2: ein Blockschaltbild einer Einrichtung zum Auslösen einer passiven Sicherheitseinrichtung, die zwei Beschleunigungsaufnehmer aufweist und
- Fig. 3: mehrere Signaldiagramme, die einen möglichen Verlauf von Signalen über der Zeit aufgetragen darstellen.

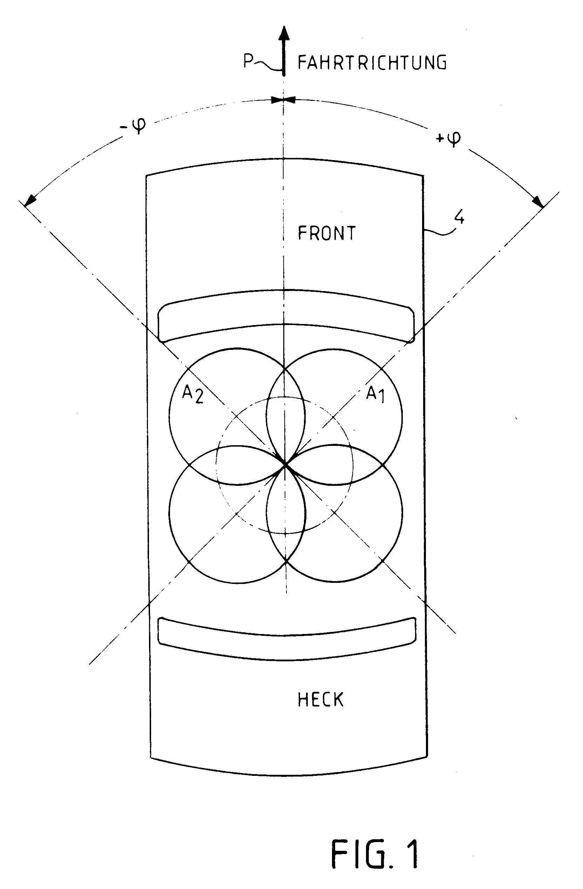

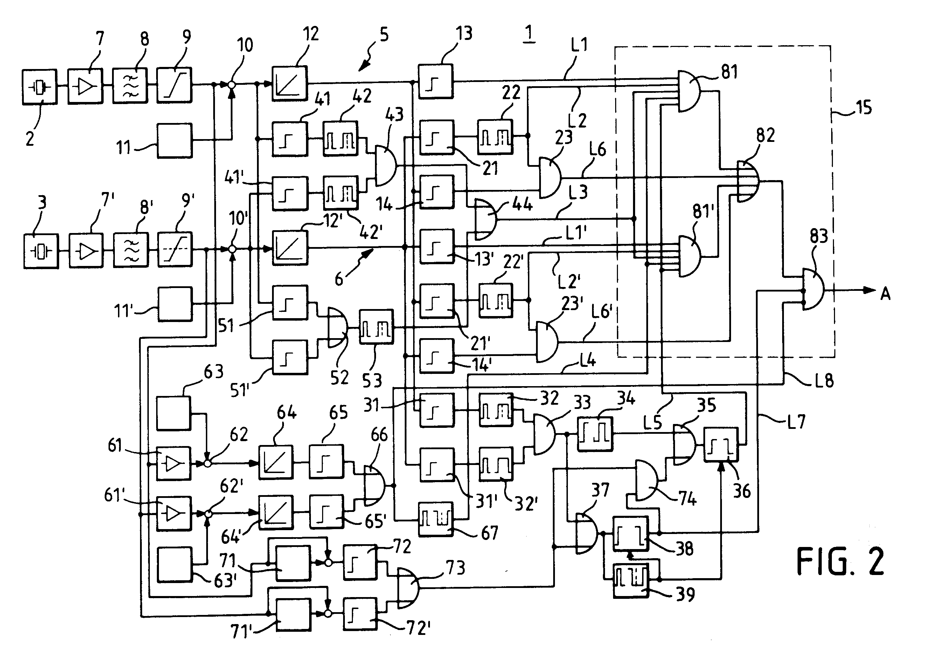

Das Blockschaltbild in Fig. 2 zeigt eine als Bewertungsschaltung 1 bezeichnete Einrichtung zum Auslösen einer nicht dargestellten Sicherheitseinrichtung eines Kraftfahrzeuges , z.B. eines Luftkissens oder einer Gurtstrammereinrichtung. Die Bewertungsschaltung 1 weist zwei Beschleunigungsaufnehmer 2 und 3 auf, z.B. zwei Piezoaufnehmer mit jeweils einer gerichteten Empfindlichkeitsachse, die in Figur 1 mit A1 bzw. A2 bezeichnet ist. Wie aus Fig. 1 hervorgeht, sind die Empfindlichkeitsachsen dieser Aufnehmer 2 und 3 mit einem Winkel +φ bzw. -φ gegen die Längsachse eines Kraftfahrzeugs 4 angestellt, dessen Fahrtrichtung mit dem Pfeil P bezeichnet ist. Der Winkel φ beträgt in diesem Falle jeweils 45°. Die Beschleunigungsaufnehmer 2 und 3 sprechen jeweils in einem Bereich um diese Empfindlichkeitsachsen entsprechend einer Kosinus-φ-Charakteristik an, wobei dieser Bereich in Fig. 1 durch die vier Kreise gekennzeichnet ist.

Die Ausgangssignale der beiden Beschleunigungsaufnehmer 2 und 3 werden in gleich aufgebauten Signalkanälen 5 bzw. 6 ausgewertet. Lediglich der Signalkanal 5 für den Beschleunigungsaufnehmer 2 wird im folgenden beschrieben:
Das Ausgangssignal des Beschleunigungsaufnehmers 2 wird in einem Verstärker 7 verstärkt , in einem Filter 8 geformt und in seiner Amplitude in einem unsymmetrischen Begrenzer 9 oberhalb einer positiven Amplitude Sa1 und unterhalb einer negativen Amplitude Sa2 begrenzt. Von dem derart gewonnenen Ausgangssignal, das einer Beschleunigung des Aufnehmers 2 entspricht, wird in einem Differenzglied 10 ein Referenzwert Sa3 abgezogen, der von einem Referenzwertgeber 11 geliefert wird. Das Ausgangssignal des Differenzgliedes 10 wird einem Integrator 12 zugeführt und in diesem aufintegriert. Der Ausgang des Integrators 12, dessen Signal einer Geschwindigkeit entspricht, wird in einer Schwellwertschaltung mit zwei parallel liegenden Schwellwertschaltern 13 bzw. 14 mit einem relativ niedrigen Schwellwert Sv2 bzw. einem zweiten höheren Schwellwert Sv3 verbunden.
Diese beiden Schwellwerte sind so gewählt, daß dann, wenn sie von dem integrierten Ausgangssignal überschritten werden, eine Auslösung der Sicherheitseinrichtung unter bestimmten Bedingungen möglich ist. Welcher der beiden Schwellwerte momentan wirken soll oder ob die Auslösung der Sicherheitseinrichtung gesperrt werden soll, wird während einer später beschrieben Bewertung entschieden. Der Ausgang des Schwellwertschalters 13 ist über eine Eingangsleitung L1 mit einer als logische Schaltung aufgebauten Auslöseschaltung 15 verbunden. Das Ausgangssignal des Schwellwertschalters 14 wird mit anderen Signalen bei der Bewertung logisch verknüpft, wie weiter unten erläutert.

Die genannten gleichartigen Bauelemente des zweiten Signalkanales 6 für den zweiten Beschleunigungsaufnehmer 3 sind mit den gleichen Bezugszeichen wie oben gekennzeichnet, denen jedoch ein (') hinzugefügt ist.

Die genannte Bewertungsschaltung setzt sich aus mehreren Teilschaltungen zusammen, nämlich einer Ansprechschaltung, einer Start- und Auswahlschaltung, einer Beschleunigungsbewertungsschaltung mit zwei Kanälen zum Vergleich mit vorgebbaren Schwellwerten, einer Heckaufprall-Bewertungsschaltung und einer sogenannten Hammerschlag-Bewertungsschaltung.

### Die Ansprechschaltung

Die Ansprechschaltung soll gewährleisten, daß die Sicherheitseinrichtung nur dann ausgelöst wird, wenn in beiden Signalkanälen 5 und 6 signifikante Signale vorliegen, aus denen zumindest auf die Möglichkeit eines Front- oder Schrägaufpralls von vorne geschlossen werden kann. Hierzu müssen Signale in beiden Signalkanälen miteinander verknüpft werden. Mit dem Ausgang des Integrators 12' ist ein dritter Schwellwertschalter 21 mit einem Schwellwert Sv1 verbunden, wobei dieser Schwellwert kleiner als der niedrigste zu einer Auslösung der Sicherheitseinrichtung führende Schwellwert ist, d.h. niedriger als Sv2. Diesem dritten Schwellwertschalter 21 ist ein Impulsverlängerer 22 nachgeschaltet, der das Ausgangssignal des Schwellwertschalters 21 auf eine Zeitspanne St1 verlängert. Der Ausgang des Impulsverlängerers 22 ist über eine Eingangsleitung L2 mit der Logik der Auslöseschaltung 15 verbunden, ebenso mit einem Eingang eines UND-Gatters 13, dessen zweitem Eingang das Ausgangssignal des Schwellwertschalters 14 zugeführt ist. Der Ausgang des UND-Gatters 23 ist über eine Eingangsleitung L6 mit der Logik der Auslöseschaltung 15 verbunden.

In gleicher Weise ist der Signalkanal 5 mit dem Signalkanal 6 verknüpft, so daß hier der Integrator 12 des ersten Signalkanales 5 mit einem Schwellwertschalter 21' mit dem Schwellwert Sv1 und der gleichen Anordnung aus einem Impulsverlängerer 22' und einem UND-Gatter 23' verbunden ist. Die Eingangsleitungen für die Logik der Auslöseschaltung 15, die auf die gleiche Art erzeugte Signale führen, sind mit L2' und L6' bezeichnet.

### Die Start- und Auswahlschaltung

Mit dieser Schaltung wird der Beginn eines Aufpralls des Fahrzeuges festgestellt. Hierzu sind die Ausgänge der Integratoren 12 bzw. 12' jeweils mit einem Schwellwertschalter 31 bzw. 31' verbunden, die jeweils den Schwellwert Sv4 aufweisen. Dieser Schwellwert wird im Bereich zwischen dem Schwellwert Sv1 und Sv2 eingestellt, d.h. er liegt ebenfalls niedriger als der für eine Auslösung der Sicherheitseinrichtung geeignete niedrigste Schwellwert Sv2. Beiden Schwellwertschaltern 31, 31' ist je ein Impulsverlängerer 32 bzw. 32' nachgeschaltet, die den vom zugeordneten Schwellwertschalter abgegebenen Impuls um eine bestimmte Zeitspanne St3 verlängern. Die Ausgänge dieser Impulsverlängerer sind mit den beiden Eingängen eines UND-Gatters 33 verbunden, dessen Ausgang mit einem flankengesteuerten Zeitglied 34, das nach einer Zeitspanne St2 nach Ansteuerung ein Signal abgibt. Der Ausgang des Zeitgliedes 34 wird einem Eingang eines ODER-Gatters 35 zugeführt, dem seinerseits ein rücksetzbarer FLIP-FLOP 36 nachgeschaltet ist. Mit dessen Ausgang ist eine zur Logik der Auslöseschaltung 15 führende Eingangsleitung L5 verbunden.

Der Ausgang des UND-Gatters 33 wird ferner mit einem Eingang des ODER-Gatters 37 und dessen Ausgang mit den Eingängen zweier Zeitglieder 38 bzw. 39 verbunden. Das Ausgangssignal des Zeitgliedes 38 ist bei fehlender Ansteuerung ein HOCH-Signal, das jedoch bei Ansteuerung nach einer sehr kurzen Zeitspanne St7 auf ein NIEDRIG-Signal abfällt. Die Ausgangssignale dieses Zeitgliedes werden über eine Eingangsleitung L7 der Logik der Auslöseschaltung 15 zugeführt. Das zweite Zeitglied 39 dient als Rücksetzglied für das Zeitglied 38 und den FLIP-FLOP 36. Dieses Zeitglied 39 gibt nach einer relativ langen Zeitspanne St8 nach der Ansteuerung ein Rücksetzsignal an das Zeitglied 38 und den FLIP-FLOP 36 ab und setzt diese in ihren jeweiligen Ausgangszustand zurück. Diese Zeitspanne ist länger als die Gesamtfunktionsdauer der Sicherheitseinrichtung im Falle eines Aufpralls.

### Die Beschleunigungsbewertung in einer Schaltung mit zwei Auswertekanälen

Diese Schaltung dient dazu, aufgrund der Ausgangssignale der Beschleunigungsaufnehmer 2 und 3 bei Bewertung der Kanäle 5 und 6 zuverlässig einen Aufprall des Fahrzeuges zu erkennen und von anderen Situationen zu unterscheiden.

Die Ausgänge der Differenzglieder 10 bzw. 10' sind jeweils mit zwei Schwellwertschaltern 41 und 41' bzw. 51 und 51' verbunden, deren Schwellwerte jeweils Sv4 bzw. Sv5 betragen. Diese Schwellwerte sind so gewählt, daß sie praktisch nur bei einem Aufprall erreicht werden. Die Ausgänge der beiden Schwellwertschalter 41 und 41' sind mit den Eingängen der beiden Impulsverlängerer 42 und 42' für die Zeit St5 verbunden. Deren Ausgänge sind mit den beiden Eingängen eines UND-Gliedes 43 verbunden und dessen Ausgang mit einem Eingang des ODER-Gatters 44.

Die Ausgänge der beiden Schwellwertschalter 51 und 51' sind mit den beiden Eingängen eines ODER-Gatters 52 und dessen Ausgang mit einem Impulsverlängerer 53 verbunden, der das Ausgangssignal des ODER-Gatters 52 auf eine Zeitspanne St5 einstellt. Diese Zeitspanne ist somit die gleiche wie die Zeitspanne der Impulsverlängerer 42 und 42'. Diese Bedingung muß jedoch nicht erfüllt sein. Der Ausgang des Impulsverlängerers 53 wird auf den zweiten Eingang des erwähnten ODER-Gatters 44 geführt, mit dessem Ausgang eine Eingangsleitung L3 für die Logik der Auslöseschaltung 15 verbunden ist.

### Die Heckaufprall-Bewertungsschaltung

Mit dieser Schaltung soll die Auslösung der passiven Sicherheitseinrichtung bei einem Heckaufprall unterbunden werden. Hierzu sind die Ausgänge der unsymmetrischen Begrenzer 9 und 9' jeweils auf den Eingang eines invertierenden Verstärkers 61 bzw. 61' geführt, so daß die bei einem Heckaufprall auftretenden negativen Ausgangssignale der Beschleunigungsaufnehmer 2 und 3 zu positiven Signalen gewandelt werden. Jedem invertierenden Verstärker 61, 61' ist ein Differenzglied 62 bzw. 62' nachgeschaltet, mit denen jeweils ein Referenzwertgeber 63 bzw. 63' verbunden ist. Durch diese Differenzgeber wird von dem Ausgangssignal der invertierenden Verstärker der Referenzbetrag entsprechend der Schwelle Sa3 abgezogen, die demnach den gleichen Wert aufweist wie diejenige des Referenzwertgebers 11 bzw. 11'. Diese Bedingung ist nicht zwingend erforderlich. Anschließend erfolgt eine Integration der Signale in jeweils einem Integrator 64 bzw. 64', denen ein Schwellwertschalter 65 bzw. 65' mit einem Schwellwert Sv5 oder ein ODER-Gatter 66 durch Verknüpfung nachgeschaltet ist. Die Auswertung der Signale erfolgt demnach nach dem gleichen Prinzip wie in den Signalkanälen 5 und 6. Der Ausgang des ODER-Gatters 66 ist einmal mit einer zu der Logik der Auslöseschaltung 15 führenden Eingangsleitung L8 und zum anderen mit einem Impulslängenverdoppler 67 verbunden, der die Impulslänge verdoppelt, jedoch bei einer Ansteuerung immer einen negativen Impuls zumindest minimaler Zeitdauer von 2tx abgibt. Der Ausgang dieses Impulslängenverdopplers ist mit einer ebenfalls zu der Logik der Auslöseschaltung 15 führenden Eingangsleitung L4 verbunden.

### Die Hammerschlag-Bewertungsschaltung

Mit dieser Schaltung soll ausgeschlossen werden, daß bei einer kurzfristigen mechanischen Belastung der Beschleunigungsaufnehmer, z.B. bei einem Hammerschlag in der Werkstatt die passive Sicherheitseinrichtung ausgelöst wird. Hierzu sind wiederum die Ausgänge der unsymmetrischen Begrenzer 9 und 9' jeweils mit dem Eingang einer Halte- und Abtastschaltung 71 bzw. 71' verbunden, in denen innerhalb jeweils einer kurzen Zeitspanne St9 der am Ende dieser Zeitspanne erreichte Endwert mit dem innerhalb dieser Zeitspanne vorhergehenden minimalen Wert verglichen wird. Die Ausgangssignale dieser Abtast- und Halteschaltungen werden jeweils einem Schwellwertschalter 72, 72' zugeführt und dort mit einer Schwelle Sa6 verglichen. Die Ausgänge dieser Schwellwertschalter 72 und 72' werden in einem ODER-Gatter 73 miteinander verknüpft, dessen Ausgang mit dem zweiten Eingang des oben erwähnten ODER-Gatters 37 verbunden ist. Der Ausgang des ODER-Gatters 73 ist ferner an einen Eingang eines UND-Gatters 74 geführt, an dessen zweitem Eingang das Ausgangssignal des Zeltgliedes 38 liegt. Der Ausgang des UND-Gatters 74 ist mit dem zweiten Eingang des ODER-Gatters 35 verbunden.

Die zum Auslösen für die passive Sicherheitseinrichtung dienende Logik der Auslöseschaltung 15 weist zwei UND-Tore 81 und 81' mit fünf Eingängen, ein die Ausgänge der UND-Gatter 81 und 81' verknüpfendes ODER-Gatter 82 mit vier Eingängen und ein zum Leistungsschalter für die passive Sicherheitseinrichtung führendes UND-Gatter 83 mit drei Eingängen auf. Mit den fünf Eingängen des UND-Gatters 81 sind die Eingangsleitungen L1, L2, L3, L4 und L5 verbunden, mit den fünf Eingängen des zweiten UND-Gatters 81' die Eingangsleitungen L1', L2', L3, L4 und L5. Die vier Eingänge für das ODER-Gatter 82 liegen an dem jeweiligen Ausgang der UND-Gatter 81 und 81', die beiden anderen Eingänge sind mit den Eingangsleitungen L6 und L6' verbunden. Der eine Eingang des UND-Gatters 83 ist mit dem Ausgang des ODER-Gattes 82 verbunden, die beiden anderen Eingänge mit den Eingangsleitungen L7 und L8, wobei die darauf geführten Signale im UND-Gatter 83 invertiert werden.

### Die Funktion der beschriebenen gesamten Bewertungsschaltung ist nun folgende:

Es sei angenommen, daß der Beschleunigungsaufnehmer 2 ein Signal abgibt, das den Referenzwert Sa3 überschreitet und somit in dem Integrator 12 aufintegriert wird. Überschreitet das aufintegrierte Signal die Schwelle Sv2 (in 13), dann liegt an der ersten Eingangsleitung L1 des UND-Tores 81 ein HOCH-Signal. Das UND-Tor 81 schaltet jedoch erst durch und löst damit die Sicherheitseinrichtung aus, wenn auch an den anderen vier Eingängen ein HOCH-Signal anliegt und ferner am UND-Gatter 83 die mit diesem verbundenen beiden Eingangsleitungen L7 und L8 ein NIEDRIG-Signal führen. Die Eingangsleitung L2 führt nur während der Zeitspanne St1 nach Ansteuerung des Impulsverlängerers 22 ein HOCH-Signal, d.h. nur dann, wenn in beiden Signalkanälen 5 und 6 die aufintegrierten Signale die niedrige Schwelle Sv1 (in 21) erreichen und somit beide Beschleunigungsaufnehmer 2 und 3 ein signifikantes Signal aufnehmen. Wird nur in einem Kanal der Schwellwert Sv1 nicht erreicht, so kann auch das UND-Gatter 81 nicht durchschalten. Ein solcher Fall kann z.B. dann auftreten, wenn ein Seitenaufprall vorliegt`

Das UND-Gatter 81 kann auch nur durchschalten, wenn die Eingangsleitung L3 ein HOCH-Signal führt. Dies bedeutet entweder, daß die niedrigere Beschleunigungsschwelle Sa4 (in 41, 41') in beiden Kanälen 5, 6 erreicht ist oder die höhere Beschleunigungsschwelle Sa5 (in 51, 51') zumindest in einem Kanal 5 oder 6 überschritten ist.

Die vierte Eingangsleitung L4 führt nur dann ein HOCH-Signal, wenn in der Heckaufprall-Bewertungsschaltung kein Heckaufprall detektiert wurde, d.h. nur dann, wenn am Eingang des invertierenden Impulslängenverdopplers 67 kein Signal anliegt. Das Eingangssignal des Impulslängenverdopplers liegt auch auf der Leitung L8, so daß durch dieses NIEDRIG-Signal der dritte Eingang des UND-Gatters 83 freigegeben wird. Würde ein Heckaufprall detektiert, so würde das Ausgangssignal des invertierenden Impulslängenverdopplers ein NIEDRIG-Signal, so daß das UND-Gatter 81 nicht freigegeben wird. Ebenso würde dann durch HOCH-Signal am Ausgang des ODER-Gatters 66 durch die Invertierung das UND-Gatter 83 gesperrt.

Schließlich muß noch das auf der Eingangsleitung L5 anliegende Signal ein HOCH-Signal sein. Durch das Flip-Flop 36 ist dies bei einem Aufprall immer der Fall während der durch das Zeitglied 34 vorgegebenen Zeitspanne St2. Vorausgesetzt hierbei ist, daß in beiden Signalkanälen 5 und 6 die aufintegrierten Signale den Schwellwert Sv4 in 31, 31' erreichen, d.h. für eine Durchschaltung des UND-Gatters 81 müssen in beiden Kanälen signifikante Signale vorliegen. Außerdem muß dann noch das Signal auf der Eingangsleitung L7 ein NIEDRIG-Signal sein, d.h. nach Beginn eines Aufpralls, was durch ein Ausgangssignal des UND-Gatters 33 detektiert wird, muß erst die Zeitspanne St7 in 38 verstrichen sein. Während dieser Zeitspanne schaltet das üblicherweise auf NIEDRIG liegende Ausgangssignal des Impulsverlängerers 38 auf HOCH und sperrt damit für diese Zeitspanne das UND-Gatter 83. Diese Sperrwirkung wird auch erzielt, wenn lediglich ein kurzer Hammerschlagimpuls detektiert wird.

Erst wenn alle diese Bedingungen erfüllt sind, schaltet das UND-Gatter 81 durch, so daß dessen Ausgangssignal an den Ausgang A der logischen Auslöseschaltung 15 hindurchgeleitet wird und die Auslösung der passiven Sicherheitseinrichtung bewirkt.

Nach Ablauf der Zeitspanne St2, die durch das Zeitglied 34 vorgegeben wird, wird durch das Flip-Flop 36 das UND-Gatter 81 über die jetzt ein NIEDRIG-Signal führende Eingangsleitung L5 gesperrt. In diesem Falle kann die Sicherheitseinrichtung nur ausgelöst werden, wenn über die Leitung L6 ein HOCH-Signal an dem ODER-Gatter 82 anliegt und die beiden Eingangsleitungen L7 und L8 ein NIEDRIG-Signal führen. Ein HOCH-Signal auf der Eingangsleitung L6 tritt jedoch nur auf, wenn an beiden Eingängen des UND-Gatters 23 ebenfalls ein HOCH-Signal anliegt, d.h. wenn das aufintegrierte Ausgangssignal des Integrators 12 den Schwellwert Sv3 des Schwellwertschalters 14 übersteigt und gleichzeitig innerhalb der durch den Impulsverlängerer 22 vorgegebenen Zeitspanne St1 das aufintegrierte Ausgangssignal des Integrators 12' die niedrige Schwelle Sv1 (in 21) überschreitet. Auch in diesem Falle müssen demnach in beiden Kanälen 5 oder 6 signifikante Signale vorliegen.

Auch während der durch den Impulsverlängerer 34 vorgegebenen Zeitspanne St2 kann das UND-Gatter 81 gesperrt werden, so daß die Auslösung der passiven Sicherheitseinrichtung nur über das ODER-Gatter 82 erfolgen kann. Das UND-Gatter 81 wird über das NIEDRIG-Signal auf der Eingangsleitung L2 gesperrt. Ebenso kann eine Sperrung dann erfolgen, wenn bei der Beschleunigungsbewertung kein relevantes Ausgangssignal entweder am Ausgang des UND-Gatters 43 oder am Ausgang es Impulsverlängerers 53 auftritt.

Die gleichen Überlegungen hinsichtlich des Durchschaltens des UND-Gatters 81 gelten auch für das zweite UND-Gatter 81', da auf den Eingangsleitungen L1' und L2' in ähnlicher Weise wie auf den Eingangsleitungen L1 und L2 erzeugte Signale anliegen und die übrigen Leitungen L3, L4 und L5 für beide UND-Gatter 81 und 81' gemeinsam sind.

Mit der beschriebenen Schaltung können somit eine Vielzahl von Ausgangssignalen der Beschleunigungsaufnehmer 2 und 3 bewertet und eindeutig für eine Auslösung bzw. Nichtauslösung der passiven Sicherheitseinrichtung herangezogen werden.

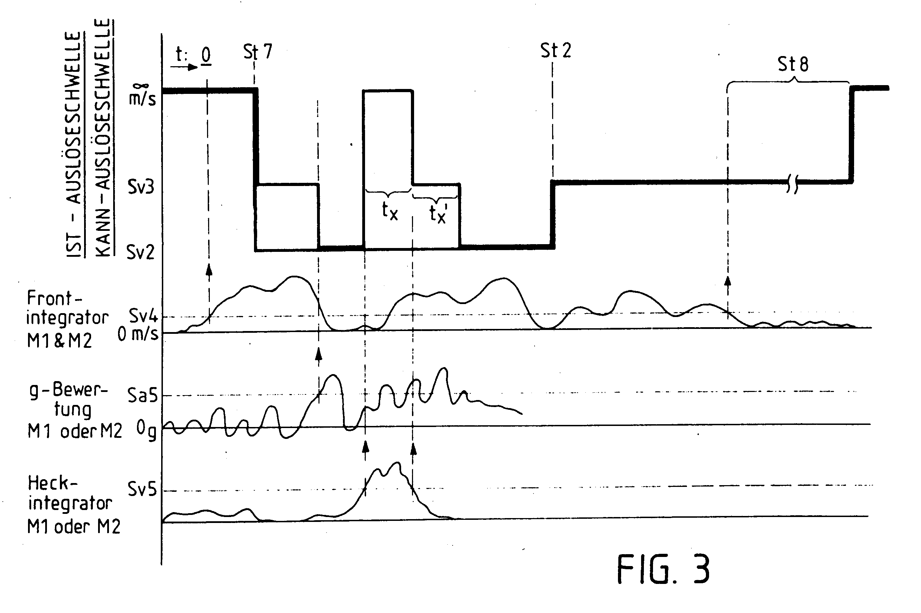

Eine schematische Darstellung z.B. möglicher Auslöseschwellen ist in Fig. 3 dargestellt. In der ersten oberen Zeile sind die beiden zu einer Auslösung der passiven Sicherheitseinrichtung geeigneten Schwellwerte Sv2 und Sv3 (in 13 und 14) angegeben, außerdem ist mit dem Zeichen ∞ die Sperrung der gesamten Einrichtung gekennzeichnet. Diese Sperrung ist bei normalem Fahrbetrieb immer gegeben, weil dann die UND-Gatter 81 und 81', das ODER-Gatter 82 und das UND-Gatter 83 in der Auslöseschaltung 15 gesperrt sind. Auf der Abszisse der einzelnen Signaldiagramme in Fig. 3 ist die Zeit eingetragen.

Zum Zeitpunkt t = 0 wird ein Aufprall im UND-Gatter 33 detektiert, da die aufintegrierten Ausgangssignale in den Signalkanälen 5 und 6 den durch die Schwellwertschalter 31 und 31' vorgegebenen Schwellwert Sv4 überschreiten.

In der zweiten Zeile (von oben) des Signaldiagrammes in Fig. 3 ist lediglich das aufintegrierte Ausgangssignal eines Signalkanals 5 oder 6 dargestellt. Die Bewertungsschaltung 1 bleibt nach der Detektierung des Nullpunktes noch während der durch das Zeitglied 38 vorgegebenen kurzen Zeitspanne St7 gesperrt, da während dieser Zeitspanne die damit verbundene Eingangsleitung L7 ein HOCH-Signal führt und das UND-Gatter 83 sperrt. Erst nach dieser Freigabe wird einer der beiden Schwellwerte Sv2 bzw. Sv3 in 13 bzw. 14 wirksam, je nach den oben angegebenen Kriterien. In diesem Falle ist angenommen, daß der Schwellwert Sv3 wirksam wird.

Zu einem anderen Zeitpunkt kann in der Bewertungsschaltung 1 in einem der Signalkanäle 5 oder 6 die hohe Beschleunigungsschwelle Sa5 in 51 bzw. 51' überschritten werden, was in der dritten Zeile (von oben) des Signaldiagrammes in Fig. 3 dargestellt ist, wodurch die wirksame Schwelle auf den Schwellwert Sv2 eingestellt wird.

Sollte dann z.B. in der Zeit tx ein Heckaufprall detektiert werden, d.h. die Schwelle Sv5 in einem der Schwellwertschalter 65 oder 65' der Heckaufprallbewertungsschaltung überschritten werden, so wird der Schwellwert auf ∞ angehoben, d.h. die gesamte Bewertungsschaltung 1 wird gesperrt. Dies erfolgt während der Dauer des von dem ODER-Gatter 66 abgegebenen Impulses.

Anschließend wird nach Ablauf der Zeit tx der Schwellwert auf den größeren Schwellwert Sv3 abgesenkt, da das Ausgangssignal des Impulslängenverdopplers 67 die beiden UND-Gatter 81 und 81' in der Auslöseschaltung 15 sperrt, und fällt ggf. nach der Zeit tx' wieder auf Sv2.

Ist dann die durch das Zeitglied 34 gegebene Zeitspanne St2 abgelaufen, wird in der Bewertungsschaltung z.B. in 14 der höhere Schwellwert Sv3 wirksam. Fällt das aufintegrierte Ausgangssignal in den Signalkanälen 5 und 6 unter den Schwellwert Sv4 (in 31 bzw. 31'), so wird nach Ablauf der Zeitspanne St8 die gesamte Bewertungsschaltung 1 durch das invertierte Rücksetzsignal des Zeitgliedes 39 in seinen Ausgangszustand ∞ zurückversetzt.

Zum Ausführungsbeispiel sei darauf hingewiesen, daß der Verlauf der Schwellwerte in der obersten Zeile in Fig. 3 nicht dem tatsächlichen Verlauf, insbesondere nicht während eines Aufpralls entspricht, sondern nur zur Demonstration der Umschaltmöglichkeiten zwischen den einzelnen Schwellen dient. Selbstverständlich kann die beschriebene Schaltung für den Aufprallsensor auch anders als in den Zeichnungen dargestellt werden, Z.B. mit Mikroprozessor. Auch wenn in der dargestellten Bewertungsschaltung diskrete Elemente aufgeführt sind, so sind diese Elemente im wesentlichen durch ihre Funktion bestimmt.

## Patentansprüche

1. Einrichtung zur Auslösung einer passiven Sicherheitseinrichtung, die in einem Fahrzeug (4) eingebaut ist und im Falle eines Aufpralles ausgelöst wird, wobei die Signale von der Erfassung von Beschleunigungen dienenden Elementen (2, 3), die Empfindlichkeitsachsen (A1, A2) aufweisen, die jeweils in einem Winkel (φ) positiv bzw. negativ geneigt zur Längachse des Fahrzeugs (4) ausgerichtet sind, mittels eines Integrators (12, 12') integriert einer nachfolgenden Schwellwertschaltung (13, 14, 13', 14') zugeführt werden, wobei ein die Sicherheitseinrichtung auslösendes Signal nur dann erzeugt wird, wenn die durch logische Verknüpfung und Schwellwertdiskriminierung überwachten Signale der Elemente (2, 3) bestimmte Amplituden- und Richtungsbedingungen erfüllen, **dadurch gekennzeichnet,** daß mindestens zwei Beschleunigungsaufnehmer (2, 3) jeweils einem Signalkanal (5, 6) zugeordnet sind, der den jeweiligen Beschleunigungsaufnehmer (2, 3) umfaßt, daß jedem Signalkanal (5, 6) jeweils ein Integrator (12, 12') zugeordnet ist, dessen Ausgang jeweils mit einem ersten und einem zweiten Schwellwertschalter (13, 13', 14, 14') verbunden ist, wobei die über erste Eingangsleitungen (L1, L1') mit einer Auslöseschaltung (15) verbundenen ersten Schwellwertschalter (13, 13') einen relativ niedrigen Schwellwert (Sv2) und die zweiten Schwellwertschalter (14, 14') einen höheren Schwellwert (Sv3) aufweisen, und daß eine Bewertung der Aufnehmersignale in mehreren Teilschaltungen erfolgt, deren Ausgangsslgnale gemeinsam mit den Ausgangssignalen der ersten Schwellwertschalter (13, 13') in einer Auslöseschaltung (15) logisch verknüpft werden, wobei
- jeweils die integrierten Aufnehmersignale und die Ausgangssignale der zweiten Schwellwertschalter (14, 14') auswertende, mit der Auslöseschaltung (15) über zweite Eingangsleitungen (L2, L2') und sechste Eingangsleitungen (L6, L6') verbundene Ansprechschaltungen (21, 22, 23; 21', 22', 23') nur dann ein Signal an die Auslöseschaltung (15) abgeben, wenn in beiden Signalkanälen (5 und 6) signifikante integrierte Aufnehmersignale vorliegen, aus denen zumindest auf die Möglichkeit eines Front- oder Schrägaufpralls (schräg von vorne) geschlossen werden kann,
- eine die integrierten Aufnehmersignale auswertende, mit der Auslöseschaltung (15) über eine fünfte und eine siebte Eingangsleitung (L5, L7) verbundene Start- und Auswahlschaltung (31, 31', 32, 32', 33 - 39) den Beginn eines Aufpralls des Fahrzeugs feststellt,
- eine die Aufnehmersignale auswertende, mit der Auslöseschaltung (15) über eine dritte Leitung (L3) verbundene Beschleunigungsbewertungsschaltung (41, 41', 42, 42', 51, 51', 52, 52', 53) einen Aufprall des Fahrzeug erkennt und von anderen Situationen unterscheidet,
- eine die Aufnehmersignale auswertende, mit der Auslöseschaltung (15) über eine vierte Eingangsleitung (L4) verbundene Heckaufprall-Bewertungsschaltung (61, 61', 62, 62', 63, 63', 64, 64', 65, 65', 66, 67) die Auslösung der passiven Sicherheitseinrichtung bei einem Heckaufprall unterbindet,
- eine die Aufnehmersignale auswertende, mit der Start- und Auswahlschaltung (31, 31', 32, 32', 33 - 39) verbundene Hammerschlag-Bewertungsschaltung (71, 71', 72, 72', 73, 74) bei einer kurzfristigen mechanischen Belastung der Beschleunigungsaufnehmer die Auslösung der passiven Sicherheitseinrichtung verhindert, und
- die Auslöseschaltung (15) jeweils die Signale auf den ersten, zweiten, dritten, vierten und fünften Eingangsleitungen (L1, L2, L3, L4, L5; L1', L2', L3', L4', L5') über UND-Gatter (81; 81') verknüpft und deren Ausgangssignale zusammen mit den Signalen der sechsten Eingangsleitungen (L6, L6') einem ODER-Gatter (82) zuführt, und wobei als Ausgangsglied ein UND-Gatter (83) dient, dem die Signale des ODER-Gatters (82) und invertierte Signale der siebten und achten Eingangsleitungen (L7, L8) zuführbar sind.

2. Einrichtung nach Anspruch 1, **dadurch gekennzeichnet**, daß die Bewertungsschaltung eine Ansprechschaltung (21, 22, 23, 21', 22', 23') aufweist, die mit den Integratoren (12, 12') beider Signalkanäle (5, 6) verbunden ist und die einen Schwellwertschalter (21, 21') mit einem festen Schwellwert (Sv1) aufweist, wobei jedoch der Eingang des jeweiligen Schwellwertschalters (21, 21') mit dem Integrator (12, 12') des anderen Signalkanals (6, 5) verbunden ist.

3. Einrichtung nach Anspruch 2, **dadurch gekennzeichnet**, daß den Schwellwertschaltern (21, 21') in der Ansprechschaltung (21, 22, 23, 21', 22', 23') jeweils ein Zeitglied (22, 22') nachgeschaltet ist.

4. Einrichtung nach Anspruch 2 oder 3, **dadurch gekennzeichnet**, daß jede Ansprechschaltung (21, 22, 23; 21', 22', 23') einen mit dem Ausgang des jeweiligen Integrators (12, 12') verbundenen dritten Schwellwertschalter (21, 21') umfaßt, dessen Schwellwert (Sv1) kleiner als der niedrigste zu einer Auslösung der Einrichtung führende Schwellwert (Sv2) ist.

5. Einrichtung nach Anspruch 1, **dadurch gekennzeichnet**, daß die Bewertungsschaltung eine Start- und Auswahlschaltung (31, 31', 32, 32', 33 bis 39) aufweist, die mit allen Signalkanälen (5, 6) verbunden ist und eigene Schwellwerte (Sv4) aufweist, wobei die zugehörigen Schwellwertschalter (31, 31') über ein UND-Gatter (33) miteinander verbunden sind, und daß dem UND-Gatter ein Zeitglied (34) nachgeschaltet ist, das über eine fünfte (L5) und siebte (L7) Eingangsleitung mit der Logikschaltung (15) verbunden ist.

6. Einrichtung nach Anspruch 5, **dadurch gekennzeichnet**, daß die Start- und Auswahlschaltung (31, 31', 32, 32', 33 bis 39) ein weiteres Zeitglied (38) zum verzögerten Freigeben der Sicherheitseinrichtung nach Beginn eines Aufpralls des Fahrzeuges aufweist.

7. Einrichtung nach Anspruch 1, **dadurch gekennzeichnet**, daß die Bewertungsschaltung eine Beschleunigungsbewertungsschaltung (41, 42, 41', 42', 43; 51, 51', 52, 53) aufweist, mit der die Ausgangssignale der Beschleunigungsaufnehmer (2, 3) unterschiedlicher Signalkanäle (5, 6) bewertet werden, und daß der Ausgang der Beschleunigungsbewertungsschaltung (L3) mit einem Eingang der Logikschaltung (15) verbunden ist.

8. Einrichtung nach Anspruch 8, **dadurch gekennzeichnet**, daß die Beschleunigungsaufnehmer (2, 3) zumindest eines der Signalkanäle (5, 6) mit jeweils einer Schwellwertschaltung (41, 41') verbunden sind, deren Ausgänge mit den Eingängen eines gemeinsamen UND-Gatters (43) verbunden sind, und daß der Ausgang dieses UND-Gatters einen Teil der Beschleunigungsbewertungsschaltung (41, 42, 41', 42', 43, 51, 51', 52, 53) ist.

9. Einrichtung nach Anspruch 8 oder 9, **dadurch gekennzeichnet**, daß die Ausgänge der Beschleunigungsaufnehmer (2, 3) zumindest eines der Signalkanäle (5, 6) jeweils mit Schwellwertschaltern (51, 51') für einen besonderen Schwellwert (Sv5) verbunden sind, deren Ausgänge mit den Eingängen eines gemeinsamen ODER-Gatters (52) verbunden sind, und daß der Ausgang dieses ODER-Gatters einen Teil der Beschleunigungsbewertungsschaltung (41, 42, 41', 42', 43, 51, 51', 52, 53) bildet.

10. Einrichtung nach Anspruch 1, **dadurch gekennzeichnet**, daß die Ausgänge der Beschleunigugnsaufnehmer (2, 3) zumindest eines der Signalkanäle (5, 6) jeweils mit einem Inverter (61, 61') und diese mit Integratoren (64, 64') von nachgeschalteten Schwellwertschaltern (65, 65') mit einem besonderen Schwellwert (Sv5) verbunden sind, und daß dieser Schwellwertschalter mit einem Sperreingang (L8) der Logikschaltung (15) verbunden ist.

11. Einrichtung nach Anspruch 10, **dadurch gekennzeichnet**, daß die Ausgänge der Schwellwertschaltungen (65, 65') mit den Eingängen eines gemeinsamen ODER-Gatters (66) verbunden sind, und daß der Ausgang dieses ODER-Gatters den Teil einer Heckaufprall-Bewertungsschaltung (61, 61', 62, 62', 63, 63', 64, 64', 65, 65', 66, 67) bildet.

12. Einrichtung nach Anspruch 11, **dadurch gekennzeichnet**, daß der Ausgang des ODER-Gatters (66) der Heckaufprall-Bewertungsschaltung ferner über ein Zeitglied (67) zu einem Sperreingang (L4) der Logikschaltung (15) geführt ist.

13. Einrichtung nach Anspruch 1, **dadurch gekennzeichnet**, daß die Bewertungsschaltung eine Hammerschlag-Bewertungsschaltung (71, 72, 71', 72, 73, 74) zum Bestimmen kurzfristiger hoher mechanischer Einwirkungen auf die Beschleunigungsaufnehmer (2, 3) aufweist, wobei diese Schaltung für die Ausgangssignale der Beschleunigungsaufnehmer (2, 3) jeweils eine Abtast- und Halteschaltung (71, 71') aufweist, die innerhalb einer bestimmten Zeitspanne (St9) den Momentanwert der Ausgangssignale am Ende dieser Zeitspanne (St9) mit dem vorhergehenden Minimalwert vergleicht, und mit zumindest einer der Eingangsleitungen (L5, L7) zum Sperren der Logikschaltung (15) verbunden ist.

14. Einrichtung nach einem der vorhergehenden Ansprüche, dadurch gekennzeichnet, daß die Logikschaltung (15) zumindest für einige Signalkanäle (5, 6) je ein UND-Gatter (81, 81') aufweist, deren Eingänge einerseits mit den Schwellwert-Schaltern (13, 13') der Signalkanäle verbunden ist, die einen relativ niedrigen, eine Auslösung der passiven Sicherheitseinrichtung ermöglichenden Schwellwert (Sv2) aufweisen, und andererseits mit einem oder mehreren Ausgängen (L1, L1', L2, L2', L3, L4, L5) der Bewertungsschaltung verbunden ist.

15. Einrichtung nach einem der vorhergehenden Ansprüche, dadurch gekennzeichnet, daß die Logikschaltung (15) zumindest für einige der Signalkanäle (5, 6) ein gemeinsames ODER-Gatter (82) aufweist, dessen Eingänge mit denjenigen der Schwellwertschalter (14, 14') für den höheren Schwellwert (Sv3) verbunden sind.

16. Einrichtung nach einem der vorhergehenden Ansprüche, dadurch gekennzeichnet, daß als Ausgangsglied der Logikschaltung (15) ein UND-Gatter (83) vorgesehen ist, dessen einer Eingang mit dem ODER-Gatter (82) und dessen andere Eingänge für invertierte Signale mit den anderen Eingangsleitungen (L7, L8) verbunden sind.

## Claims

1. A device for triggering a passive safety device which is installed in a vehicle (4) and which is triggered in the event of an impact, wherein the signals from elements (2, 3) serving to detect accelerations have sensitivity axes (A1, A2) which are each aligned at an angle (φ) inclined positively or negatively to the longitudinal axis of the vehicle (4), are fed, integrated by means of an integrator (12, 12') to a subsequent threshold value circuit (13, 14, 13', 14'), wherein a signal which triggers the safety device is only generated if the signals from the elements (2, 3), which are monitored by means of logic linking and threshold value discrimination comply with certain amplitude and direction conditions, characterised in that at least two acceleration sensors (2, 3) are each associated with a signal channel (5, 6) which comprises the respective signal Sensor (2, 3), that an integrator (12, 12') is associated with each signal channel (5, 6), the output of which integrator is connected to a first and a second threshold value switch (13, 13', 14, 14'), wherein the first threshold value switches (13, 13'), which are connected via first triggering lines (L1, L1') to a triggering circuit (15), have a relatively low threshold value (Sv2) and the second threshold value switches (14, 14') have a higher threshold value (Sv3), and that the sensor signals are assessed in a plurality of partial circuits, the output signals from which are logically combined in a triggering circuit (15) jointly with the output signals from the first threshold value switches (13, 13'), wherein
- response circuits (21, 22, 23; 21', 22', 23') which in each case evaluate the integrated sensor signals and the output signals from the second threshold switches (14, 14') and which are connected to the triggering circuit (15) via second input lines (L2, L2') and sixth input lines (L6, L6') only send a signal to the triggering circuit (15) if significant integrated sensor signals are present in both signal channels (5 and 6), from which sensor signals at least the possibility of a frontal or oblique impact (obliquely from the front) can be inferred,
- a start and selection circuit (31, 31', 32, 32', 33-39), which evaluates the integrated sensor signals, and which is connected to the triggering circuit (15) via a fifth and seventh input line (L5, L7), determines the start of an impact of the vehicle,
- an acceleration assessment circuit (41, 41', 42, 42', 51, 51', 52, 52', 53), which evaluates the sensor signals and which is connected to the triggering circuit (15) via a third line (L3), identifies an impact of the vehicle and distinguishes it from other situations,
- a rear impact assessment circuit (61, 61', 62, 62', 63, 63', 64, 64', 65, 65', 66, 67), which evaluates the sensor signals and which is connected to the triggering circuit (15) via a fourth input line (L4), prevents the passive safety device from being triggered on a rear impact,
- a hammer blow assessment circuit (71, 71', 72, 72', 73, 74), which evaluates the sensor signals and which is connected to the start and selection circuit (31, 31', 32, 32', 33 - 39) prevents the passive safety device from being triggered on a short-term mechanical loading of the acceleration sensors, and
- the triggering circuit (15) links the signals on the first, second, third, fourth and fifth input lines (L1, L2, L3, L4, L5; L1', L2', L3', L4', L5') via AND gates (81; 81') and feeds their output signals together with the signals of the sixth input lines (L6, L6') to an OR gate (82), and wherein an AND gate (83) serves as the output element, to which the signals from the OR gate (82) and inverted signals from the seventh and eighth input lines (L7, L8) can be fed.

2. A device according to claim 1, characterised in that the assessment circuit comprises a response circuit (21, 22, 23, 21', 22', 23') which is connected to the integrators (12, 12') of both signal channels (5, 6) and which has a threshold switch (21, 21') with a fixed threshold value (Sv1), wherein the input of the respective threshold value switch (21, 21') is connected to the integrator (12, 12') of the other signal channel (6, 5), however.

3. A device according to claim 2, characterised in that a time function element (22, 22') is connected downstream of the threshold value switches (21, 21') in the response circuit (21, 22, 23, 21', 22', 23') in each case.

4. A device according to claim 2 or 3, characterised in that each response circuit (21, 22, 23; 21', 22', 23') comprises a third threshold value switch (21, 21') connected to the output of the respective integrator (12, 12'), the threshold value (Sv1) of which is less than the lowest threshold value (Sv2) which leads to the triggering of the device.

5. A device according to claim 1, characterised in that the assessment circuit comprises a start and selection circuit (31, 31', 32, 32', 33 to 39) which is connected to all the signal channels (5, 6) and has separate threshold values (Sv4), wherein the associated threshold value switches (31, 31') are connected to each other via an AND gate (33), and that a time function element (34) is connected downstream of the AND gate, which time function element is connected to the logic circuit (15) via a fifth (L5) and seventh (L7) input line.

6. A device according to claim 5, characterised in that the start and selection circuit (31, 31', 32, 32', 33 to 39) has an additional time function element (38) for the delayed release of the safety device after the start of an impact of the vehicle.

7. A device according to claim 1, characterised in that the assessment circuit comprises an acceleration assessment circuit (41, 42, 41', 42', 43; 51, 51', 52, 53) by means of which the output signals from the acceleration sensors (2, 3) of different signal channels (5, 6) are assessed, and that the output of the acceleration assessment circuit (L3) is connected to an input of the logic circuit (15).

8. A device according to claim 8, characterised in that the acceleration sensors (2, 3) of at least one of the signal channels (5, 6) are each connected to a threshold value circuit (41, 41'), the outputs of which are connected to the inputs of a common AND gate (43), and that the output of the said AND gate is part of the acceleration assessment circuit (41, 42, 41', 42', 43, 51, 51', 52, 53).

9. A device according to claim 8 or 9, characterised in that the outputs of the acceleration sensors (2, 3) of at least one of the signal channels (5, 6) are each connected to threshold value switches (51, 51') for a special threshold value (Sv5), the outputs of which are connected to the inputs of a common OR gate (52), and that the output of the said OR gate forms part of the acceleration assessment circuit (41, 42, 41', 42', 43, 51, 51', 52, 53).

10. A device according to claim 1, characterised in that the outputs of the acceleration sensors (2, 3) of at least one of the signal channels (5, 6) are each connected to an inverter (61, 61') and the latter are connected to integrators (64, 64') of threshold value switches (65, 65') with a special threshold value (Sv5) connected downstream, and that this threshold value switch is connected to a blocking input (L8) of the logic circuit (15).

11. A device according to claim 10, characterised in that the outputs of the threshold value circuits (65, 65') are connected to the inputs of a common OR gate (66), and that the output of the said OR gate forms part of a rear impact assessment circuit (61, 61', 62, 62', 63, 63', 64, 64', 65, 65', 66, 67).

12. A device according to claim 11, characterised in that the output of the OR gate (66) of the rear impact assessment circuit is in addition fed via a time function element (67) to a blocking input (L4) of the logic circuit (15).

13. A device according to claim 1, characterised in that the assessment circuit comprises a hammer blow assessment circuit (71, 72, 71', 72', 73, 74) for the determination of short-term high mechanical effects on the acceleration sensors (2, 3), wherein this circuit comprises a scanning and holding circuit (71, 71') for the output signals from the acceleration sensors (2, 3) in each case, which scanning and holding circuit compares, over a certain time interval (St9), the instantaneous value of the output signals at the end of this time interval (St9) with the previous minimum value, and which is connected to at least one of the input lines (L5, L7) for blocking the logic circuit (15).

14. A device according to any one of the preceding claims, characterised in that the logic circuit (15) has an AND gate (81, 81') in each case for at least some signal channels (5,6), the inputs of which AND gate are connected firstly to the threshold value switches (13, 13') of the signal channels which comprise a relatively low threshold value (Sv2) permitting the passive safety device to be triggered, and secondly to one or more outputs (L1, L1', L2, L2', L3, L4, L5) of the assessment circuit.

15. A device according to any one of the preceding claims, characterised in that the logic circuit (15) has a common OR gate (82) for at least some of the signal channels (5, 6), the inputs of which are connected to those of the threshold value switches (14, 14') for the higher threshold value (Sv3).

16. A device according to any one of the preceding claims, characterised in that an AND gate (83) is provided as the output element of the logic circuit (15), one input of which AND gate is connected to the OR gate (82) for inverted signals, and the other inputs of which are connected to the other input lines (L7, L8).

## Revendications

1. Dispositif de déclenchement d'un dispositif de sécurité passive qui est installé dans un véhicule (4) et est déclenché en cas de collision, les signaux délivrés par des éléments (2, 3) servant à détecter des accélérations, dont les axes de sensibilité (A1, A2) sont inclinés chacun d'un angle (φ) positif ou négatif par rapport à l'axe longitudinal du véhicule (4), étant intégrés au moyen d'un intégrateur (12, 12') et transmis à un circuit à seuil (13, 14, 13', 14') monté à la suite, un signal déclenche le dispositif de sécurité n'étant produit que lorsque les signaux des éléments (2, 3) surveillés par combinaison logique et discrimination de seuil satisfont certaines conditions prédéterminées amplitude et direction, caractérisé par le fait qu'au moins deux capteurs d'accélération (2, 3) sont associés chacun à un canal de signal (5, 6) qui comprend le capteur d'accélération (2, 3) concerné, par le fait qu'à chaque canal de signal (5, 6) est associé un intégrateur (12, 12') dont la sortie est reliée chaque fois à un premier et à un deuxième commutateurs à seuil (13, 13', 14, 14'), les premiers commutateurs à seuil (13, 13') qui sont connectés à un circuit de déclenchement (15) par l'intermédiaire de premières lignes d'entrée (L1, L1') présentant un seuil (Sv2) relativement bas et les deuxièmes commutateurs à seuil (14, 14') présentant un seuil (Sv3) plus élevé, et par le fait qu'un traitement des signaux des capteurs est effectué dans plusieurs circuits partiels dont les signaux de sortie sont combinés logiquement aux signaux de sortie des premiers commutateurs à seuil (13, 13') dans un circuit de déclenchement (15),
- des circuits de déclenchement intermédiaires (21, 22, 23; 21', 22', 23') qui exploitent les signaux intégrés des capteurs et les signaux de sortie des deuxièmes commutateurs à seuil (14, 14') et sont reliés au circuit de déclenchement (15) par l'intermédiaire de deuxièmes lignes d'entrée (L2, L2') et de sixièmes lignes d'entrée (L6, L6') ne délivrent un signal au circuit de déclenchement (15) que lorsque les signaux de capteur intégrés significatifs sont présents sur les deux canaux de signal (5 et 6), lesquels signaux permettent au moins de déterminer s'il s'agit d'un choc frontal ou de biais (choc avant de biais),
- un circuit de démarrage et de sélection (31, 31', 32, 32', 33 - 39) qui exploite les signaux intégrés des capteurs et est relié au circuit de déclenchement (15) par l'intermédiaire d'une cinquième et d'une septième lignes d'entrée (L5, L7) détectant le début d'une collision de véhicules,
- un circuit d'évaluation d'accélération (41, 41', 42, 42', 51, 51', 52, 52', 53) qui exploite les signaux des capteurs et est relié au circuit de déclenchement (15) par l'intermédiaire d'une troisième ligne (L3) détectant une collision du véhicule et la distinguant parmi d'autres situations,
- un circuit d'évaluation de collision arrière (61, 61', 62, 62', 63, 63', 64, 64' 65, 65', 66, 67) qui exploite les signaux des capteurs et est relié au circuit de déclenchement (15) par l'intermédiaire d'une quatrième ligne d'entrée (L4) bloquant le déclenchement du dispositif de sécurité passive en cas de collision arrière,
- un circuit d'évaluation de coups (71, 71', 72, 72', 73, 74) qui exploite les signaux des capteurs et est relié au circuit de démarrage et de sélection (31, 31', 32, 32', 33 - 39) empêchant le déclenchement du dispositif de sécurité passive en cas de sollicitation mécanique de courte durée des capteurs d'accélération et,
- le circuit de déclenchement (15) combinant respectivement les signaux des première, deuxième, troisième, quatrième et cinquième lignes d'entrée (L1, L2, L3, L4, L5; L1', L2', L3', L4', L5') par l'intermédiaire de portes ET (81, 81') et transmettant les signaux de sortie de celles-ci avec les signaux des sixièmes lignes d'entrée (L6, L6') à une porte OU (82) et l'élément de sortie étant une porte-ET (83) à laquelle les signaux de la porte-OU (82) et les signaux inversés des septième et huitième lignes d'entrée (L7, L8) sont envoyés.

2. Dispositif selon la revendication 1, caractérisé par le fait que le circuit d'évaluation comporte un circuit de déclenchement intermédiaire (21, 22, 23, 21', 22', 23') qui est relié aux intégrateurs (12, 12') des deux canaux de signaux (5, 6) et présente un contacteur à seuil (21, 21') avec un premier seuil fixe (Sv1), l'entrée du commutateur à seuil (21, 21') concerné étant reliée à l'intégrateur (12, 12') de l'autre canal de signal (6, 5).

3. Dispositif selon la revendication 2, caractérisé par le fait que dans le circuit de déclenchement intermédiaire (21, 22, 23, 21', 22', 23') un élément de temporisation (22, 22') est monté derrière chaque commutateur à seuil (21, 21').

4. Dispositif selon la revendication 2 ou 3, caractérisé par le fait que chaque circuit de déclenchement intermédiaire (21, 22, 23; 21', 22', 23') comprend un troisième commutateur à seuil (21, 21') qui est relié à la sortie de l'intégrateur (12, 12') concerné, dont le seuil (Sv1) est inférieur au seuil minimal (Sv2) provoquant le déclenchement du dispositif.

5. Dispositif selon la revendication 1, caractérisé par le fait que le circuit d'évaluation comprend un circuit de démarrage et de sélection (31, 31', 32, 32', 33 à 39) qui est retié à tous les canaux de signal (5, 6) et présente des seuils (Sv4) propres, les commutateurs à seuil (31, 31') correspondants étant reliés entre eux par l'intermédiaire d'une porte-ET (33) et par le fait qu'un élément de temporisation (34) est monté à la suite de la porte-ET, lequel élément de temporisation est relié au circuit logique (15) par l'intermédiaire de cinquième (L5) et septième (L7) lignes d'entrée.

6. Dispositif selon la revendication 5, caractérisé par le fait que le circuit de démarrage et de sélection (31, 31', 32, 32', 33 à 39) comporte un élément de temporisation (38) supplémentaire pour le déclenchement temporisé du dispositif de sécurité après le début d'une collision du véhicule.

7. Dispositif selon la revendication 1, caractérisé par le fait que le circuit d'évaluation comporte un circuit d'évaluation d'accélération (41, 42, 41', 42', 43; 51, 51', 52, 53) au moyen duquel les signaux de sortie des capteurs d'accélération (2, 3) de canaux de signal (5, 6) différents sont exploités et par le fait que la sortie du circuit d'évaluation d'accélération (L3) est reliée à une entrée du circuit logique (15).

8. Dispositif selon la revendication 7, caractérisé par le fait que les capteurs d'accélération (2, 3) d'au moins l'un des canaux de signal (5, 6) sont reliés chacun à un circuit de seuil (41, 41') dont les sorties sont connectées aux entrées d'une porte-ET (43) commune et par le fait que la sortie de ladite porte-ET est une partie du circuit d'évaluation de l'accélération (41, 42, 41', 42', 43, 51, 51', 52, 53).

9. Dispositif selon la revendication 8 ou 9, caractérisé par le fait que les sorties des capteurs d'accélération (2, 3) d'au moins l'un des canaux de signal (5, 6) sont reliés chacun à des commutateurs à seuil (51, 51') pour une valeur de seuil (Sv5) particulière dont les sorties sont connectées aux entrées d'une porte OU (52) commune et par le fait que la sortie de ladite porte-OU constitue une partie du circuit d'évaluation de l'accélération (41, 42, 41', 42', 43, 51, 51', 52, 53).

10. Dispositif selon la revendication 1, caractérisé par le fait que les sorties des capteurs d'accélération (2, 3) d'au moins l'un des canaux de signal (5, 6) sont reliées chacune à un inverseur (61, 61') et que ces derniers sont reliés à des intégrateurs (64, 64') de commutateurs à seuil (65, 65') à valeur de seuil (Sv5) particulière qui sont montés à la suite et par le fait que les commutateurs à seuil sont reliés à une entrée de blocage (L8) du circuit logique (15).

11. Dispositif selon la revendication 10, caractérisé par le fait que les sorties des circuits à seuil (65, 65') sont reliées aux entrées d'une porte-OU (66) commune et par le fait que la sortie de ladite porte-OU constitue la partie d'un circuit d'évaluation de collision arrière (61, 61', 62, 62', 63, 63', 64, 64', 65, 65', 66, 67).

12. Dispositif selon la revendication 11, caractérisé par le fait que la sortie de la porte-OU (66) du circuit dévaluation de collision arrière est amenée par l'intermédiaire d'un élément de temporisation (67) à une entrée de blocage (L4) du circuit logique (15).

13. Dispositif selon la revendication 1, caractérisé par le fait que le circuit d'évaluation comporte un circuit d'évaluation de coups (71, 72, 71', 72', 73, 74) pour détecter des actions mécaniques de forte intensité et de courte durée sur les capteurs d'accélération (2, 3), ce circuit comportant pour les signaux de sortie des capteurs d'accélération (2, 3) respectivement un circuit de palpage et de maintien (71, 71') qui, à l'intérieur d'un laps de temps (St9) déterminé, compare la valeur instantanée des signaux de sortie à la fin de ce laps de temps (St9) avec une valeur minimale antérieure et est relié à au moins l'une des lignes d'entrée (L5, L7) aux fins de bloquer le circuit logique (15).

14. Dispositif selon l'une des revendications précédentes, caractérisé par le fait que le circuit logique (15) comporte pour certains canaux de signal (5, 6) au moins une porte-ET (81, 81') associée dont les entrées sont reliées d'une part aux commutateurs à seuil (13, 13') des canaux de signal qui présentent un seuil (Sv2) relativement bas permettant un déclenchement du dispositif de sécurité passive et d'autre part sont reliés à une ou plusieurs sorties (L1, L1', L2, L2', L3, L4, L5) du circuit d'évaluation.

15. Dispositif selon l'une des revendications précédentes, caractérisé par le fait que le circuit logique (15) comporte pour certains canaux de signal (5, 6) au moins, une porte-OU commune dont les entrées sont reliées à celles du commutateur à seuil (14, 14') pour le seuil (Sv3) plus élevé.

16. Dispositif selon l'une des revendications précédentes, caractérisé par le fait qu'il est prévu comme élément de sortir du circuit logique (15) une porte-ET (83) dont l'une des entrées est reliée à la porte-OU (82) et dont les autres entrées pour des signaux inversés sont reliées aux autres lignes d'entrée (L7, L8).
